# EUROPÄISCHE PATENTSCHRIFT

(11) **EP 0 732 297 B1**
(45) Veröffentlichungstag und Bekanntmachung des Hinweises auf die Patenterteilung: **01.12.2004**
(21) Anmeldenummer: 96103847.8
(22) Anmeldetag: 12.03.1996
(51) Int. Cl.: B66C 1/66, F16C 11/04, F16C 11/02

(54) **Lagerkörper**
Supporting body
Elément de support

(30) Priorität: 17.03.1995 DE 19509629
(43) Veröffentlichungstag der Anmeldung: 18.09.1996
(73) Patentinhaber: Riedel und Söhne oHG, D-47475 Kamp-Lintfort (DE)
(72) Erfinder: Riedel, Norbert, 47495 Rheinberg (DE); Riedel, Ludger, 46509 Xanten (DE)
(74) Vertreter: Bergmann, Michael

(56) Entgegenhaltungen:
- DE-A- 3 023 894
- DE-C- 948 747
- DE-C- 3 414 825
- DE-C- 4 008 619
- DE-U- 9 410 245
- FR-A- 2 036 680

## Beschreibung

Die Erfindung betrifft einen Lagerkörper mit einem Schwenkteil, wobei dieser Lagerkörper zur Lagerung des an einem Bauteil schwenkbeweglich angeordneten Schwenkteiles dient.

Bei der Lagerung eines schwenkbeweglichen Teiles an einem ortsfest angeordnetem Bauteil ist das schwenkbewegliche Teil mit dem festen Teil über einen zylindrischen einteiligen Bolzen drehbeweglich bzw. schwenkbeweglich verbunden.

In der FR 2 036 680 A ist ein Lagerkörper zur Lagerung eines an einem Bauteil schwenkbeweglich angeordneten Schwenkteiles offenbart. Der Lagerkörper besteht aus einem vorderen Körperteil und einem rückwärtigen Zapfenteil. Das Körperteils und das Zapfenteil sind durch eine Fixiereinrichtung in ihrer Lage zueinander gehalten.

Aus der DE 40 08 619 C1 ist eine Containerentsorgungsanordnung mit einem Mobilkran mit einer hydraulisch betätigbaren, an dem Mobilkran drehbeweglich aufgehängten Greifzange bekannt, die zwei gegenüberliegend angeordnete und hydraulisch gegeneinander verschiebbare Greifbacken aufweist. Diese hintergreifen formflüssig mit Greifklauen jeweils den Stirnrand eines Containers zu dessen Anheben, Kippen und Absenken. Bei dieser bekannten Containerentsorgungsanordnung ist vorgesehen, daß ein Lastkraftwagen mit einem Autokran zum Anheben, Kippen und Absenken von Containern vorgesehen ist, die leer auf den Lastwagen zur Entsorgungsstelle gebracht, dort mittels des Autokrans von dem Lastkraftwagen abgeladen und später gefüllt mit Entsorgungsmaterial mittels des Autokrans auf den Lastkraftwagen aufgeladen und von der Entsorgungsstelle weggebracht werden.

Hierbei ist des weiteren vorgesehen, daß an den beiden unteren Enden der Greifbacken je ein um eine horizontale Achse schwenkbeweglich gelagerter und schwenkbar angetriebener Klauenträger vorgesehen ist, an dem je eine Greifklaue angeordnet ist. Dabei sind viele untereinander gleiche Container vorgesehen, die gegenüberwiegende, nach außen offene Klaueneingriffstaschen für die Greifklauen aufweisen.

Die an den unteren Enden der Greifbacken angeordneten Klauenträger sind an den Greifbacken mittels eines Schwenkbolzens schwenkbeweglich gelagert und weiter oben mittels eines Drehbolzens mit je einem Hydraulikzylinder drehbeweglich verbunden. Dabei sind die Kolbenstangen der Hydraulikzylinder an den Klauenträgern und die Zylinder der Hydraulikzylinder weiter oben an der Greifzange drehbar angeordnet. Diese Lagerung gemäß der DE 40 08 619 C1 ist wegen der vorliegenden Hebeverhältnisse sehr hoch beansprucht.

Der Erfindung liegt die Aufgabe zugrunde, einen Lagerkörper zu schaffen, der eine weniger hohe Beanspruchung zur Folge hat.

Diese Aufgabe wird erfindungsgemäß dadurch gelöst, daß der Lagerkörper aus einem vorderen Körperteil, einem rückwärtigen Zapfenteil und einer Fixierungseinrichtung besteht, wobei das Körperteil und das Zapfenteil durch die Fixierungseinrichtung in ihrer Lage zueinander gehalten sind, und daß das Schwenkteil über eine Schweißnaht mit dem gewindeseitigen Teil des vorderen Körperteils verbunden ist, wobei der gewindeseitige Teil integraler Bestandteil des Körperteils ist.

Dieser Lagerzapfen bzw. das von dem Lagerzapfen gebildete Lager bietet den Vorteil, daß die Lagerung zu beiden Seiten des Lastpunkts erfolgt. Sie hat eine minimale Baubreite und ist selbstsichernd.

Nach einem weiteren Merkmal der Erfindung kann vorgesehen sein, daß die Fixierungseinrichtung aus einem Fixierungsbolzen besteht, insbesondere einer Schraube, beispielsweise einer Inbusschraube oder einer Verbusschraube.

Nach einem weiteren Merkmal der Erfindung kann vorgesehen sein, daß der Lagerkörper ein auf das Außengewinde einer Inbusschraube passendes Innengewinde aufweist, schraubenkopfseitig einen Anschlag sowie einen Lagerring hat und eine zylindrische Außenfläche mit einem gewindeseitigen kegelstumpfmantelförmigen Bereich aufweist.

Des weiteren empfiehlt es sich, daß das rückwärtige Zapfenteil einen inneren zylindrischen Fortsatz und einen äußeren zylindrischen Ring als Lagerfläche sowie einen Anschlag für den Schraubenkopf und eine zentrale Bohrung für den Schraubenbolzen aufweist.

Zweckmäßig ist die Inbusschraube oder die Verbusschraube in das vordere Körperteil eingeschraubt.

Des weiteren können die Zylindermanteloberfläche des vorderen Körperteils und die Außenfläche des äußeren Ringes miteinander fluchten.

Außerdem kann der Lagerkörper so ausgebildet sein, daß der rückwärtige Zapfenteil mit dem inneren Fortsatz gegen den Anschlag des vorderen Körperteils anliegt.

Zweckmäßig weist das rückwärtige Zapfenteil einen Anschlag für den Fixierungsbolzen auf.

Die Zylindermanteloberfläche des vorderen Körperteils und des rückwärtigen Zapfenteils sind zweckmäßig durch den inneren Fortsatz des rückwärtigen Zapfenteils axial voneinander distanziert.

Zweckmäßig ist bei dem Lagerkörper vorgesehen, daß am bolzenseitigen Ende des vorderen Körperteiles eine Konusfläche vorgesehen ist.

Der Lagerkörper nach einem oder mehreren der vorhergehenden Ansprüche kann auf die Lagerung einer Halteplatte für Greifklauen an den Backen einer Greifzange zum Heben und Kippen eines Containers angewendet werden, wie er bei einer beispielsweise in der DE 40 08 619 C1 beschriebenen Containerentsorgungsanordnung benutzt wird.

Im Anwendungsfalle empfiehlt es sich, den Lagerkörper so anzuordnen, daß die Achse der Bohrung für den Sitz des Lagerkörpers in einem Klauenträger, der an einem Arm schwenkbeweglich befestigt ist, und die Achse der Bauteile mit möglichst großem Abstand voneinander angeordnet sind.

Die Erfindung wird nachfolgend anhand eines in der Zeichnung dargestellten Ausführungsbeispieles des näheren erläutert. Es zeigt
- Fig. 1: eine Seitenansicht auf den Lagerkörper teilweise im Schnitt,
- Fig. 2: eine Ansicht auf Figur 1 in Richtung des Pfeiles II.
- Fig. 3: eine Ansicht auf Figur 1 in Richtung des Pfeiles III,
- Fig. 4: einen Schnitt durch eine Greifbacke und den zugehörigen Klauenträger sowie das Lager,
- Fig. 5: eine Ansicht auf Figur 4 in Richtung des Pfeiles V und

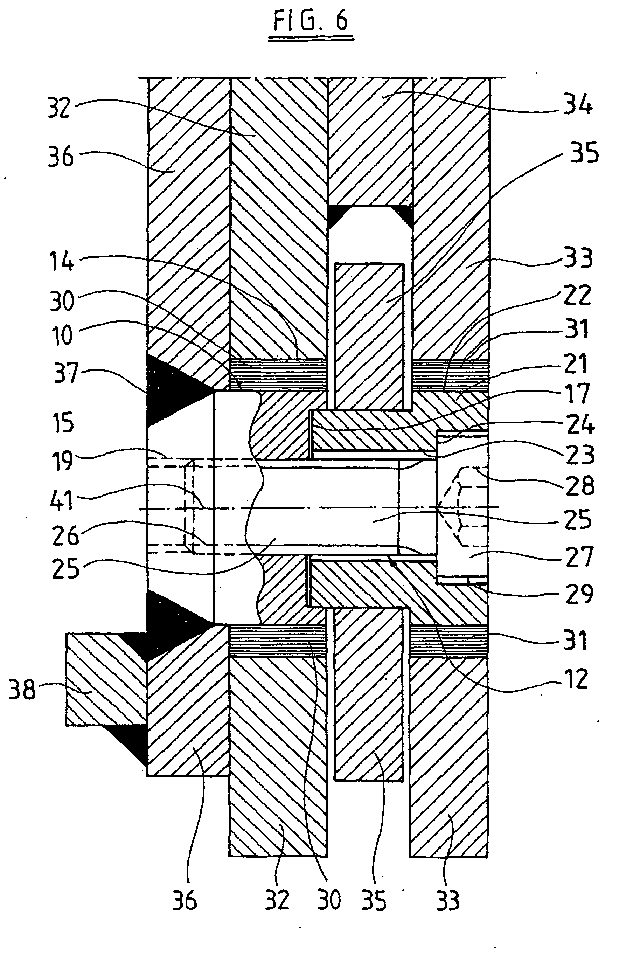

- Fig. 6: eine vergrößerte Darstellung des Bereiches VI.

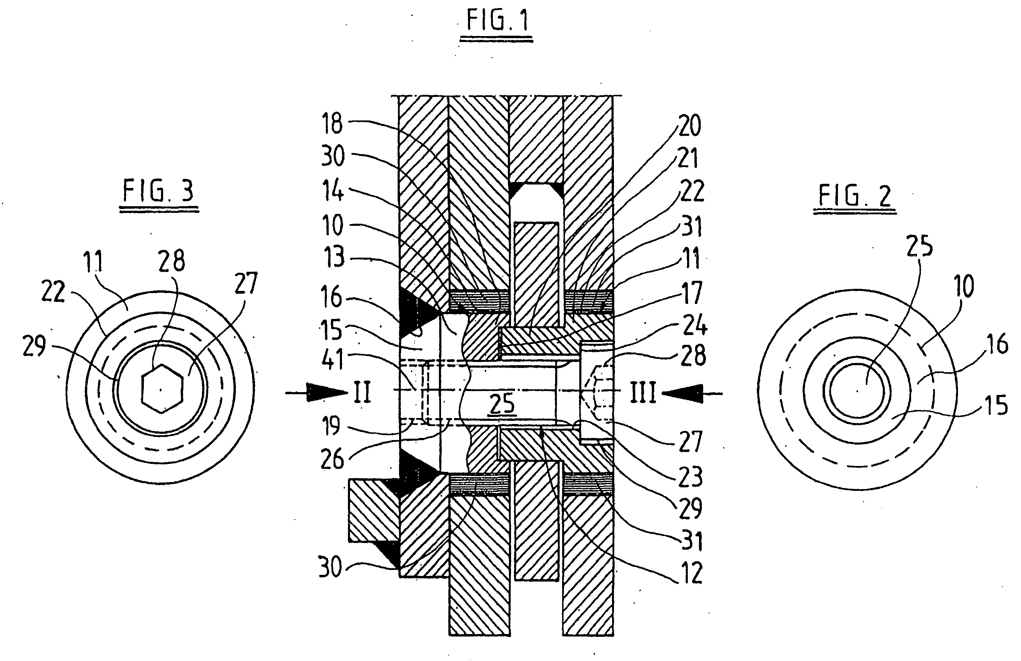

Der Lagerkörper besteht, wie sich insbesondere aus den Figuren 1, 2 und 3 ergibt, aus einem vorderen Körperteil 10, einem rückwärtigen Zapfenteil 11 und einer Inbusschraube 12.

Der vordere Körperteil 10 hat ein zylindrisches Teil 13 mit einer Zyfindermanteloberfläche 14 und ein konisches Teil 15 mit einem kegelstumpfförmigen Mantel 16. Schraubenkopfseitig ist ein Anschlag 17 vorgesehen, über den ein Kragen 18 ragt. Der vordere Körperteil 10 hat Innengewinde 19.

Das rückwärtige Zapfenteil 11 hat einen inneren Fortsatz 20 und einen äußeren Ring 21. Der Ring 21 hat eine zylindermantelförmige Außenfläche 22, die mit der Zylindermanteloberfläche 14 des vorderen Körperteiles 10 fluchtet. Das rückwärtige Zapfenteil 11 hat innen eine Bohrung 23 und einen Anschlag 24.

Die Inbusschraube 12 hat einen Zapfen 25 mit einem Außengewinde 26 und einen Schraubenkopf 27 mit einem Innensechskant 28 sowie einer zylinderförmigen Außenfläche 29 und ist mit dem Außengewinde 26 in das Innengewinde 19 des vorderen Körperteiles 10 geschraubt. Das rückwärtige Zapfenteil 11 liegt mit dem inneren Fortsatz 20 fest, d.h. unverdrehbar gegen den Anschlag 17 des vorderen Körperteiles 10. Die Inbusschraube 12 liegt mit dem Schraubenkopf 27 gegen den Anschlag 24 des rückwärtigen Zapfenteils 11.

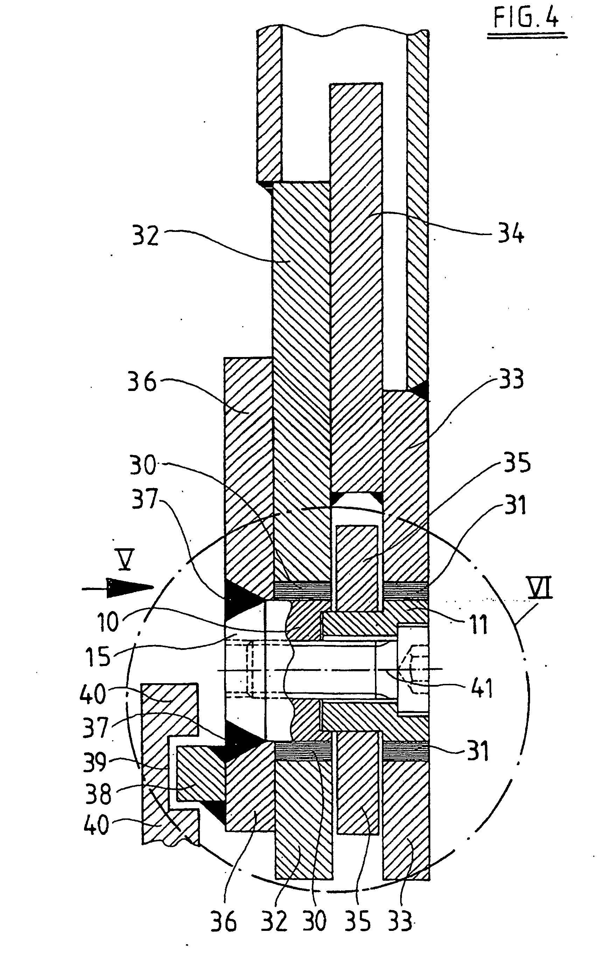

Wie insbesondere in Figur 4 dargestellt ist, ist auf dem vorderen Zapfenteil 10 eine Lagerschale 30 und auf dem rückwärtigen Zapfenteil 11 eine Lagerschale 31 vorgesehen, die mit einem Arm 32 und einen äußeren Zangenkopfteil 33, zwischen denen eine Distanzierungsplatte angeordnet ist, verbunden, insbesondere verklebt sind. Zwischen dem Arm 32 und dem äußeren Zangenkopfteil 33 ist auf dem Lagerzapfen eine Stützplatte 35 vorgesehen, die der axialen Festlegung des Bauteils am Lager dient.

Ein Klauenträger 36 ist über eine Schweißnaht 37 mit dem gewindeseitigen Teil des vorderen Zapfenteils 10 verbunden. Am unteren Ende des Klauenträgers 36 ist eine Klaue 38 vorgesehen, die eine Klaueneingriffstasche 39 eines angedeuteten Containers 40 eingreift.

Bei Wirken eines Drehmomentes auf den Klauenträger 36 um die Drehachse 41 dreht sich das Bauteil, bestehend aus dem Arm 32 und dem äußeren Zangenkopfteil 33 sowie der Distanzplatte 34 auf der als Lagerfläche dienenden Zylindermanteloberfläche 14.

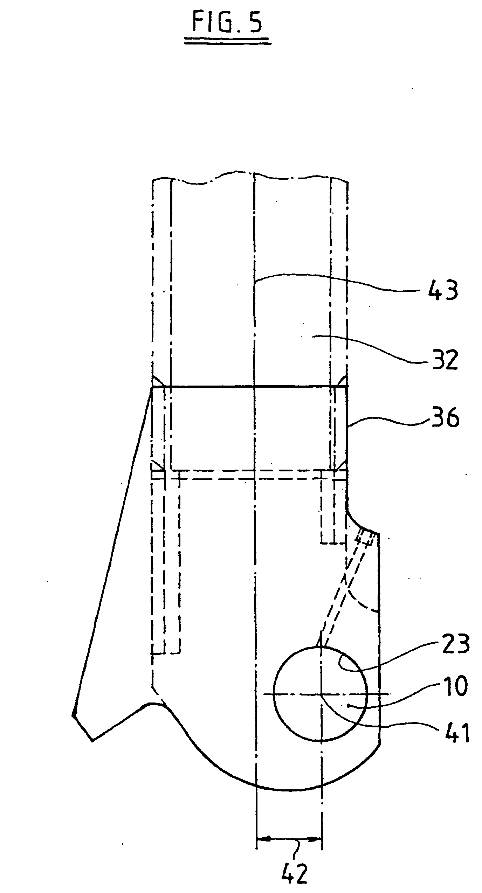

In der Darstellung gemäß Figur 5 ist der Lagerkörper weggelassen. Die Achse 41 der im Klauenträger 36 vorgesehenen Bohrung 23 ist um ein möglichst großes Maß 42 von der Längsachse 43 des Armes 32 und des äußeren Zangenkopfteiles 33 entfernt. Damit ist der Vorteil verbunden, daß der Klauenträger 36 um einen Drehwinkel von bis zu 160 ° ohne eine zusätzliche Umlenkung gedreht werden kann. Bei zentrischer Anordnung der Bohrung 23 im Klauenträger 36, also bei fehlendem Abstand 42 wäre dieser Drehwinkel nur über einen Umlenkmechanismus, beispielsweise einen Kniehebel zu erreichen.

### Bezugszeichenliste

- 10: vorderes Körperteil
- 11: rückwärtiges Zapfenteil
- 12: Schraube
- 13: zylindrischer Teil
- 14: Zylinderfläche
- 15: gewindeseitiger Teil
- 16: Kegelstumpfmantel
- 17: Anschlag
- 18: Ring
- 19: Innengewinde
- 20: innerer Fortsatz
- 21: Ring
- 22: Zylinderfläche
- 23: Bohrung
- 24: Anschlag
- 25: Schraubenbolzen
- 26: Außengewinde
- 27: Schraubenkopf
- 28: Innensechskant
- 29: Außenumfang
- 30: Lagerschale
- 31: Lagerschale
- 32: Arm
- 33: Äußeres Zangenkopfteil
- 34: Distanzplatte
- 35: Stützplatte
- 36: Klauenträger
- 37: Schweißnaht
- 38: Klaue
- 39: Klaueneingriffstasche
- 40: Container
- 41: Achse
- 42: Maß
- 43: Längsachse

## Patentansprüche

1. Lagerkörper mit einem Schwenkteil, wobei dieser Lagerkörper zur Lagerung des an einem Bauteil schwenkbeweglich angeordneten Schwenkteites dient,
**dadurch gekennzeichnet,**
**daß** der Lagerkörper aus einem vorderen Körperteil (10), einem rückwärtigen Zapfenteil (11) und einer Fixierungseinrichtung (12) besteht, wobei das Körperteil (10) und das Zapfenteil (11) durch die Fixierungseinrichtung (12) in ihrer Lage zueinander gehalten sind, und daß das Schwenkteil (36) über eine Schweißnaht (37) mit dem gewindeseitigen Teil des vorderen Körperteils (10) verbunden ist, wobei der gewindeseitige Teil integraler Bestandteil des Körperteils (10) ist.

2. Lagerkorper mit einem Schwenkteil nach Anspruch 1, **dadurch gekennzeichnet, daß** die Fixierungseinrichtung (12) aus einem Fixierungsbolzen besteht, insbesondere einer Schraube, beispielsweise einer inbusschraube oder einer Verbusschraube.

3. Lagerkörper mit einem Schwenkteil nach Anspruch 1 oder 2, **dadurch gekennzeichnet, daß** das der Lagerkörper ein auf das Außengewinde (26) einer Inbusschraube (12) passendes Innengewinde aufweist, schraubenkopfseitig einen Anschlag (24) sowie einen Lagerring (21) hat und eine zylindrische Außenfläche (14) mit einem gewindeseitigen kegelstumpfmantelförmigen Bereich (16) aufweist.

4. Lagerkörper mit einem Schwenkteil nach einem der vorhergehenden Ansprüche, **dadurch gekennzeichnet, daß** das rückwärtige Zapfenteil (11) einen inneren zylindrischen Fortsatz (20) und einen äußeren zylindrischen Ring (21) als Lagerfläche sowie einen Anschlag (24) für den Schraubenkopf (27) und eine zentrale Bohrung (23) für den Schraubenbolzen (25) aufweist.

5. Lagerkörper mit einem Schwenkteil nach einem der vorhergehenden Ansprüche, **dadurch gekennzeichnet, daß** die Inbusschraube oder die Verbusschraube in das vordere Körperteil (10) eingeschraubt ist.

6. Lagerkörper mit einem Schwenkteil nach einem der vorhergehenden Ansprüche, **dadurch gekennzeichnet, daß** die Zylindermanteloberfläche (14) des vorderen Körperteiles (10) und die Außenfläche (22) des äußeren Ringes (21) miteinander fluchten.

7. Lagerkörper mit einem Schwenkteil nach einem der vorhergehenden Ansprüche, **dadurch gekennzeichnet, daß** der rückwärtige Zapfenteil (11) mit dem inneren Fortsatz (20) gegen den Anschlag (17) des vorderen Körperteils (10) anliegt.

8. Lagerkörper mit einem Schwenkteil nach einem der vorhergehenden Ansprüche, dadurch gekennzeic net, daß das rückwärtige Zapfenteil (11) einen Anschlag (24) für den Fixierungsbolzen (12) aufweist.

9. Lagerkörper mit einem Schwenkteil nach einem der vorhergehenden Ansprüche, **dadurch gekennzeichnet, daß** die Zylindermanteloberfläche (14) des vorderen Körperteils (10) und des rückwärtigen Zapfenteils (11) durch den inneren Fortsatz (20) des rückwärtigen Zapfenteils (11) axial voneinander distanziert sind.

10. Lagerkörper mit einem Schwenkteil nach einem der vorhergehenden Ansprüche, **dadurch gekennzeichnet, daß** am bolzenseitigen Ende des vorderen Körperteiles (10) eine Konusfläche (16) vorgesehen ist.

11. Anwendung des Lagerkörpers nach einem oder mehreren der vorhergehenden Ansprüche auf die Lagerung einer Halteplatte (36) für Greifklauen (38) an den Backen einer Greifzange zum Heben und Kippen eines Containers.

12. Anwendung nach Anspruch 11, **dadurch gekennzeichnet, daß** die Achse (41) der Bohrung (23) für den Sitz des Lagerkörpers in einem Klauenträger (36), der an einem Arm (32) schwenkbeweglich befestigt ist, und die Achse (43) der Bauteile (32) mit möglichst großem Abstand (42) voneinander angeordnet sind.

## Claims

1. Bearing body with a swivelling part, in which this bearing body serves as a bearing for the swivelling part disposed on a structural member so as to swivel, **characterised in that**
the bearing body consists of a front body part (1), a back journal part (11) and a fixing device (12) in which the body part (10) and the journal part (11) are held in position relative to each other by the fixing device (12), and that the swivelling part (36) is connected with the thread-side part of the front body part (10) by a welded seam (37), whereby the thread-side part is an integral part of the body part (to).

2. Bearing body with a swivelling part according to claim 1, **characterised in that** the fixing device (12) consists of a fixing bolt, in particular a screw, for example an Allen screw or a Verbus securing screw.

3. Bearing body with a swivelling part according to claim 1 or 2, **characterised in that** the bearing body has an inner thread matching the outer thread (26) of an Allen screw (12), has a stop (24) on the screw head side and also a bearing (21) and has a cylindrical outer area (14) with a thread-side area (16) in the shape of a truncated cone.

4. Bearing body with a swivelling part according to one of the preceding claims **characterised in that** the back journal part (11) has an inner cylindrical prolongation (20) and an external cylindrical ring (21) as bearing face, plus a stop (24) for the screw head (27) and a central boring (23) for the screw bolts (25).

5. Bearing body with a swivelling part according to one of the preceding claims **characterised in that** the Allen screw or the Verbus securing screw is screwed into the front body part (10).

6. Bearing body with a swivelling part according to one of the preceding claims **characterised in that** the cylinder jacket surface (14) of the front body part (10) and the outer surface (22) of the outer ring (21) are flush with each other.

7. Bearing body with a swivelling part according to one of the preceding claims **characterised in that** the back journal part (11), with the inner prolongation (20), abuts on the stop (17) of the front body part (10).

8. Bearing body with a swivelling part according to one of the preceding claims **characterised in that** the back journal part (11) has a stop (24) for the fixing bolts (12).

9. Bearing body with a swivelling part according to one of the preceding claims **characterised in that** the cylinder jacket surfaces (14) of the front body part (10) and of the back journal part (11) are axially spaced from each other by the inner prolongation (20) of the back journal part (11).

10. Bearing body with a swivelling part according to one of the preceding claims **characterised in that** there is a conical area (16) provided at the bolt-side end of the front body part (10).

11. Application of the bearing body according to one or more of the preceding claims on the bearing arrangement of a mechanism plate (36) for gripping claws (38) on the jaws of a grappler for raising and tipping a container.

12. Application according to claim 11, **characterised in that** the axis (41) of the boring (23) for the seat of the bearing body in a claw bearer (36) which is fixed so as to pivot on an arm (32), and the axis (43) of the structural members (32) are disposed at the greatest possible distance (42) from each other.

## Revendications

1. Élément de support avec une partie pivotante, cet élément de support servant au support de la partie pivotante disposée sur un élément de construction de manière à pouvoir effectuer un mouvement pivotant, **caractérisé en ce que** l'élément de support est constitué d'une partie d'élément antérieure (10), d'une partie tourillon postérieure (11) et d'un dispositif de fixation (12), la partie d'élément (10) et la partie tourillon (12) étant maintenues dans leur position l'une par rapport à l'autre par le dispositif de fixation (12) et **en ce que** la partie pivotante (36) est reliée à la partie du côté filetage de la partie d'élément antérieure (10) par un cordon de soudure (37), la partie du côté filetage faisant partie intégrante de la partie d'élément (10).

2. Élément de support avec une partie pivotante selon la revendication 1, **caractérisé en ce que** le dispositif de fixation (12) est constitué d'un boulon de fixation, en particulier une vis, par exemple un boulon à tête six pans creuse ou une vis à tête six pans fraisée.

3. Élément de support avec une partie pivotante selon la revendication 1 ou 2, **caractérisé en ce que** l'élément de support présente un filetage intérieur s'adaptant sur le filetage extérieur (26) de la vis à tête à six pans creuse (12), a du côté de la tête de vis une butée (24) ainsi qu'une bague d'appui (21) et présente une surface extérieure cylindrique (14) avec une région en forme de cône tronqué du côté filetage.

4. Élément de support avec une partie pivotante selon une des revendications précédentes, **caractérisé en ce que** la partie tourillon (11) postérieure présente une avancée cylindrique intérieure (20) et une bague cylindrique extérieure (21) comme surface d'appui ainsi qu'une butée (24) pour la tête (27) de vis et un orifice central (23) pour le boulon fileté (25).

5. Élément de support avec une partie pivotante selon une des revendications précédentes, **caractérisé en ce que** la vis à tête à six pans creuse ou la vis à tête à six pans fraisée est vissée dans la partie d'élément (10) antérieure.

6. Élément de support avec une partie pivotante selon une des revendications précédentes, **caractérisé en ce que** la surface d'enveloppe cylindrique (14) de partie d'élément (10) antérieure et la surface extérieure (22) de la bague extérieure (21) sont alignées l'une sur l'autre.

7. Élément de support avec une partie pivotante selon une des revendications précédentes, **caractérisé en ce que** partie tourillon (11) postérieure repose avec l'avancée intérieure (20) contre la butée (17) de la partie d'élément (10) antérieure.

8. Élément de support avec une partie pivotante selon une des revendications précédentes, **caractérisé en ce que** partie tourillon (11) postérieure présente une butée (24) pour le boulon de fixation (12).

9. Élément de support avec une partie pivotante selon une des revendications précédentes, **caractérisé en ce que** la surface d'enveloppe cylindrique (14) de la partie d'élément (10) antérieure et de la partie tourillon (11) postérieure sont distancées axialement l'une de l'autre par le prolongement intérieur (20) de la partie tourillon (11) postérieure.

10. Élément de support avec une partie pivotante selon une des revendications précédentes, **caractérisé en ce qu'**à l'extrémité du côté bouton de la partie d'élément (10) antérieure, il est prévu une surface conique (16).

11. Utilisation de l'élément de support selon une ou plusieurs des revendications précédentes sur la structure d'une plaque de retenue (36) pour des griffes (38) sur les mâchoires d'une pince pour soulever et basculer un conteneur.

12. Utilisation selon la revendication 11, **caractérisée en ce que** l'axe (41) de l'orifice (23) pour le siège de l'élément de support dans un moyeu (36) qui est fixé de manière à pouvoir pivoter sur un bras (32) et l'axe (43) des éléments de construction (32) sont disposés à la plus (32) grande distance possible l'un de l'autre.
